# EUROPEAN PATENT APPLICATION

(11) **EP 3 598 270 A1**
(43) Date of publication of application: **22.01.2020**
(21) Application number: 18183922.6
(22) Date of filing: 17.07.2018
(51) Int. Cl.: G06F 3/01

(54) **METHOD AND CONTROL UNIT FOR CONTROLLING A VIRTUAL REALITY DISPLAY, VIRTUAL REALITY DISPLAY AND VIRTUAL REALITY SYSTEM**

(71) Applicant: Technische Universität München, 80333 München (DE)
(72) Inventor: HOLL, Philipp, 85457 Wörth (DE)
(74) Representative: Hoefer & Partner Patentanwälte mbB

(57) **Abstract**

The present invention refers to a method (S) of controlling a virtual reality display (10), wherein the virtual reality display (10) is a component of a virtual reality system (1) which comprises as a further component at least one position and/or motion sensor (20) attachable and assigned to a limb (51) of a user (50) of the virtual reality system (1) and referred to as a limb sensor (21), wherein limb sensor position and/or motion data (L) are obtained (S1) regarding or from the limb sensor (21), wherein based on the limb sensor position and/or motion data (L) torso position and/or orientation data (T) are derived and provided (S2) which are representative at least for a position and/or orientation of the user (50) or a part and in particular a torso (53) of the user (50), and wherein based on said torso position and/or orientation data (T) and/or its temporal development a display process of the virtual reality display (10) is controlled. The present invention accordingly further refers to a corresponding control unit (5), to a virtual reality display (10), and to a virtual reality system (1).

## Description

The present invention refers to a method and a control unit for controlling a virtual reality display, to a virtual reality display as such as well as to a virtual reality system.

Virtual reality applications become more and more important these days in the field of entertainment, but also and even more increasing in the field of pure scientific, technical, service and business applications. In many applications, a user of a virtual reality application is represented by an avatar in a virtual space and/or reality environment with the virtual space and/or reality environment being visually displayed to the user for instance by means of a headset with display units in close proximity to the user's eyes.

Known virtual reality applications still face difficulties (i) when initiating, enabling and/or realizing motion in a virtual environment in case that the physical extent of said motion in the virtual environment exceeds the dimensions of the available underlying physical environment, in particular also regarding the detection and correct representation of position, motion, gesture and/or orientation of an avatar assigned to a user and the correct detection of the user's orientation in the real space environment or space in order to correctly derive the avatar's appropriate representation and/or appearance in the virtual space environment or virtual space in this regard, and - in case of additional motion in the virtual environment - (ii) regarding the so-called simulation sickness which occurs due to discrepancies between motion displayed to and perceived by a user of an virtual reality application.

It is an object underlying the present invention to present a method and a control unit for controlling a virtual reality display, a virtual reality display as such as well as a virtual reality system which are configured to more accurately detect a user orientation and in particular a torso orientation of the user in space and to thereby better represent such an orientation by an avatar as well as to reduce - in the case of additional motion in the virtual space and/or reality environment - the influence of simulation sickness in the underlying virtual reality application.

The object underlying the present invention is achieved by a method of controlling a virtual reality display according to claim 1, by a control unit for controlling a virtual reality display according to claim 12, by a virtual reality display according to claim 14, as well as by a virtual reality system according to claim 15. Preferred embodiments are defined in the respective dependent claims.

According to a first aspect of the present invention a method of or for controlling and/or operating a virtual reality display is provided. The underlying virtual reality display is a component of a virtual reality system which comprises as a further component at least one position and/or motion sensor attachable and/or assigned to a limb of a user of the virtual reality system. This particular position and/or motion sensor is referred to as a limb sensor. According to the method suggested by the present invention
(i) limb sensor position and/or motion data are obtained regarding the limb sensor and/or from the limb sensor, e.g. directly and/or indirectly in view of an underlying limb sensor,
(ii) based on the limb sensor position and/or motion data in a further step of the method torso position and/or orientation data are derived and provided which are representative at least for a position and/or orientation of the user or a part and in particular a torso of the user in an underlying real space environment, and
(iii) based on said torso position and/or orientation data and/or its temporal development in a further step of the method a display process of the virtual reality display is controlled.

Based on said torso position and/or orientation data and/or its temporal development, avatar position and/or orientation data and/or its temporal development for an avatar representing the user in a virtual reality environment may be derived and provided.

Preferably said avatar position and/or orientation data are derived in order to be representative for a position and/or orientation of the avatar or a part and in particular a torso of the avatar in said virtual space and/or reality environment.

Additionally or alternatively, according to a further alternative embodiment of the present invention and based on said avatar position and/or orientation data and/or its temporal development, a display process of the virtual reality display may be controlled regarding the visual representation
(i) of a virtual space and/or reality environment,
(ii) of entities of the virtual space and/or reality environment and/or
(ii) of the avatar, in particular the avatar's position, orientation and/or motion,
each of which in a complete or partial ego-configuration and/or in a non-ego configuration of the virtual space and/or reality environment.

A total, complete or entire ego-configuration of the virtual space and/or reality environment is referred to as a situation wherein the virtual space and/or reality environment is displayed from an avatar's point of view without displaying portions of the avatar. A partial ego-configuration is referred to as a situation wherein the virtual space and/or reality environment is displayed from an avatar's point of view with displaying portions of the avatar. A non-ego configuration of the virtual space and/or reality environment is referred to as a situation wherein the virtual space and/or reality environment is displayed from a point of view which is remote, separated and therefore external from the avatar.

Additionally or alternatively and according to a preferred embodiment of the inventive method based on said avatar position and/or orientation data, display control data are derived and provided which are configured (i) in order to control a display unit of the virtual reality display in order to display the avatar or a part, in particular a torso of the avatar and/or (ii) in order to control the position, orientation, the temporal development and/or movement of the avatar or the part of the avatar, and in particular its respective graphical representation in said underlying virtual space and/or reality environment.

Different kinds of sensors and the respectively obtained data may be involved. According to a preferred embodiment of the inventive method, limb sensor position and/or motion data may be obtained regarding or from at least one of an arm sensor, a hand sensor, a leg sensor and a foot sensor.

Hand sensors may be provided in connection with the so-called hand controllers which are carried by a user in order to realize other performance features in the virtual space environment, for instance picking up and/or manipulating items in the virtual space. A hand controller may be designed as a data glove or the like.

The limb sensor position and/or motion data may directly be acquired from an underlying sensor, for instance as raw data describing a physical entity, for instance a position, an orientation, a velocity and/or an acceleration.

On the other hand, said limb sensor position and/or motion data may indirectly be obtained, for instance from a data storage means, a buffer or any other item being capable of providing limb sensor position and/or motion data regarding a certain underlying limb sensor.

Although the gist underlying the present invention may be based on the provision of a single limb sensor providing the required limb sensor position and/or motion data, according to a preferred embodiment of the inventive method said limb sensor position and/or motion data may be obtained regarding or from a plurality of limb sensors, for instance from a pair of arm sensors positioned at and assigned to the different arms of an underlying user.

In a concrete embodiment of the method for controlling a virtual reality display, limb sensor position and/or motion data are analyzed in view of position, orientation, velocity and/or acceleration of the respective limb sensor regarding a back-and-forth movement and/or an up-and-down movement or motion in real space and in particular the underlying real space environment.

Although the underlying limb sensor position and/or motion data may always convey some useful information regarding position, orientation, velocity and/or acceleration of the user in the underlying real space environment, it is of particular advantage to design the inventive method such that said avatar position and/or orientation data are conditionally derived in case that the limb sensor position and/or motion data refer to or are related to a predetermined state of movement or motion of the user in the underlying real space environment.

Such a state of movement or motion of the user may preferably be referred to as a state of at least one of the user walking, running and racing, and in particular to a user moving - i.e. walking, running and racing - on the spot. Such a user movement is sufficient to reduce or even avoid the occurrence of simulation sickness.

Although the limb sensor position and/or motion data are sufficient in order to yield the invention's benefits, it is of particular advantage if data from position and/or motion sensors other than said one or plural limb sensors are obtained and evaluated.

This may be done
(i) in connection with at least one of a head sensor of the underlying user, e.g. a headset, a torso sensor of the underlying user and an external sensor located remotely and/or mechanically uncoupled from the user,
(ii) for deriving presence or absence of a predetermined state of movement of the user in an underlying real space environment, in particular for determining presence or absence of a state or a condition under which the evaluation of the limb sensor position and/or motion data is appropriate,
(iii) for additionally deriving the position and/or orientation of the user or of a part of the user and in particular of the torso in the underlying real space environment and/or
(iv) for generating, verifying, proving and/or making plausible said avatar position and/orientation data.

The data from or regarding position and/or motion sensors in general and in particular from one or plural limb sensors may be obtained and/or analyzed as different types and in various ways.

For instance, said data from position and/or motion sensors obtained and/or analyzed may be at least one of
- position data, in particular coordinates, GPS data and/or data representative for a position in an underlying real space environment,
- orientation data, in particular based on coordinates, on GPS data and/or on data representative for an orientation in an underlying real space environment,
- velocity data, in particular representative for a motion in space with a certain velocity and direction in an underlying real space environment,
- acceleration data, in particular representative for a motion in space with a certain acceleration and direction in an underlying real space environment, and
- optical data, in particular image and/or camera data, representative for a view on the underlying real space environment of the user and/or representative for a view on the user or on a part of the user itself, in particular on a torso of the user or a part thereof.

The present invention further relates to a control unit which is configured in order to control and/or operate a virtual reality display. The proposed control unit is in particular configured to initiate, perform and/or control a method of controlling and/or operating a virtual reality display, wherein the method is designed according to the present invention.

According to a preferred embodiment of the present invention, the control unit is configured as a component of the underlying virtual reality system and in particular of the underlying virtual reality display.

In addition, the present invention also provides a virtual reality display. The proposed virtual reality display is configured to be used with or within, operated by and/or controlled by an embodiment of the inventive method for controlling a virtual reality display according to the present invention. Alternatively or additionally, the virtual reality display may comprise a control unit which is configured according to the present invention.

Additionally, according to the present invention a virtual reality system is provided which is configured to be used with or within, operated by and/or controlled by an embodiment of the inventive method of controlling a virtual reality display. Alternatively or additionally, the virtual reality system may comprise a control unit and/or a virtual reality display which are configured according to the present invention.

These and further details, advantages and features of the present invention will be described based on embodiments of the invention and by taking reference to the accompanying figures.
- Figure 1: is a schematic and perspective view of a real space environment and its representation in a virtual space environment obtained by applying an embodiment of the present invention.
- Figures 2 and 3: present more details regarding the situation shown in figure 1.
- Figure 4: is a schematic block diagram describing the modular configuration of a virtual reality system according to the present invention.
- Figure 5: is a schematic flow chart elucidating an embodiment of the method of controlling a virtual reality display according to the present invention.

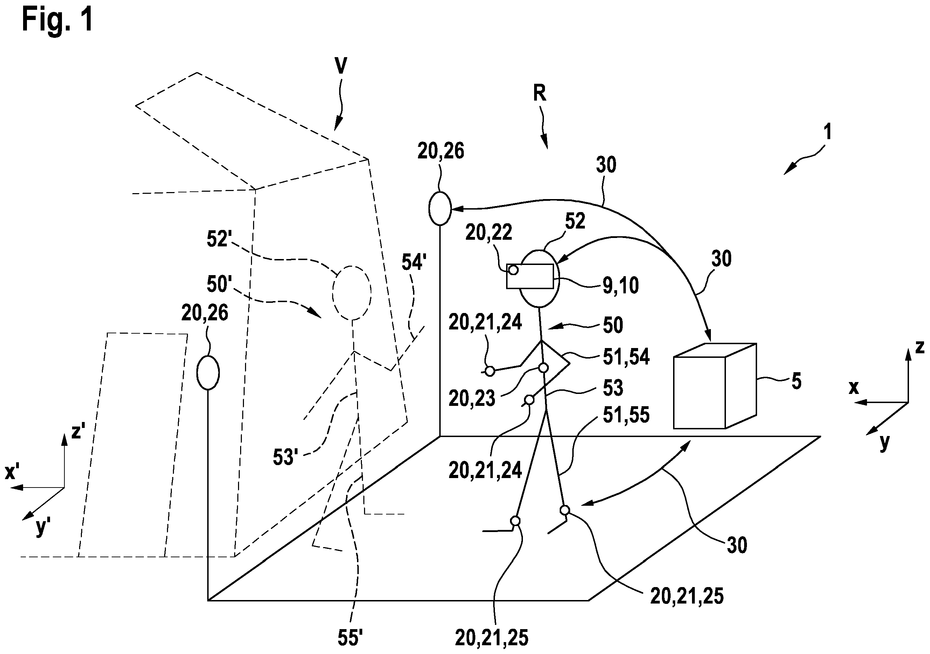

In the following, embodiments and the technical background of the present invention are presented in detail by taking reference to accompanying figures 1 to 5. Identical or equivalent elements and elements which act identically or equivalently are denoted with the same reference signs. Not in each case of their occurrence a detailed description of the elements and components is repeated.

The depicted and described features and further properties of the invention's embodiments can arbitrarily be isolated and recombined without leaving the gist of the present invention.

Figure 1 is a schematic and perspective view of a real space environment R and its representation in a virtual space environment V obtained by applying an embodiment of the virtual reality system 1 according to the present invention.

The virtual reality system 1 according to the present invention as shown in figure 1 is essentially formed by a virtual reality display device 10 formed as a headset 9 which is worn by the user 50 of the virtual reality system 1 and which is interconnected to a control unit 5 which is configured in order to control the display capabilities and the operation of the display device 10 and of the overall system 1.

In order to determine the actual position, orientation and/or motion of the user 50 in the real space environment R a variety of types of position and/or motion sensors 20 is provided.

According to the present invention the user 50 wears at least one limb sensor 21, for instance one or plural arm sensors 24 each of which is attached to a particular arm 54 referred to as a limb 51 of the user 50 and/or one or plural leg sensors 25 each of which attached to a leg 55 referred to as a limb 51 of the user 50.

Additionally or alternatively, limb sensors 21 attached and assigned to a hand or a foot of the user 50 may be provided.

It is a key aspect of the present invention that a given limb sensor 21 is assigned to the user 50 in order to provide limb sensor position and/or motion data L to be described later and also assigned to the particular user 50.

In the embodiment shown in figure 1, a torso sensor 23 is attached to the torso 53 of the user 50 and a head sensor 22 is attached to the head 52 of the user 50, the latter by means of the worn headset 9 forming an embodiment of the virtual reality display 10 according to the present invention.

Eventually, external sensors 26 may be provided as shown in figure 1, too.

The interconnection between the components of the virtual reality system 1 according to the present invention is shown in figure 1. A preferably wireless communication channel 30 is provided as a general means for exchanging measurement, status and/or control data between the system's entities.

According to the present invention and based on the limb sensor position and/or motion data L provided by one or plural limb sensors 21, so-called user or torso position and/orientation data T are derived and provided which are descriptive for the configurational state of the user 50 in the frame of reference xyz with the spatial directions x, y, and z in the real space environment R as well as a respective temporal development thereof.

Based on the user-torso position and/orientation data T, avatar position and/or orientation data A are derived and provided for an avatar 50' which is configured for representing the user 50 and in particular its position, orientation and motion or movement in a virtual space environment V, as shown in figure 1, too. Therefore, the avatar position and/or orientation data A are derived to be representative for a position, for an orientation and/or for an orientation of the avatar 50' assigned to the user 50 or a part and in particular a torso 53' of the avatar 50' in said virtual space and/or reality environment V.

Hence and depending on the particular virtual reality application, the avatar 50' assigned to the user 50 of the virtual reality system 1 shows similar to the user 50 itself a head 52' and limbs with arms 54' and legs 55' attached to a torso 53' of the avatar 50'. Again depending on the particular nature of the virtual reality application the avatar 50' has a particular position, motion and/or orientation within the frame of reference x'y'z' with spatial directions x', y', z' of the underlying virtual space and/or reality environment V.

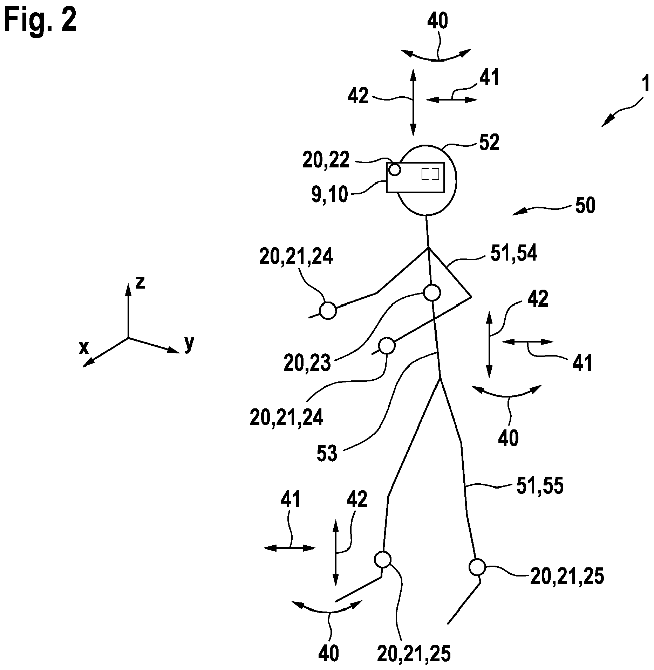

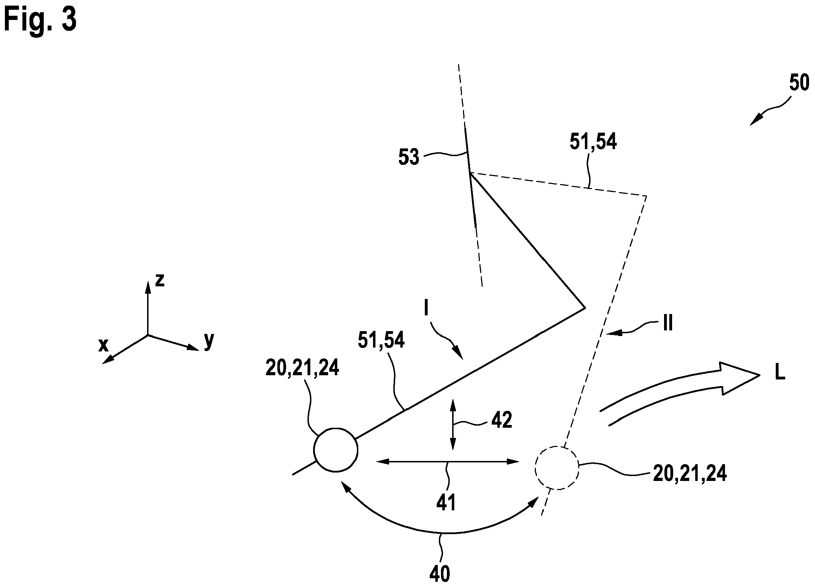

Figures 2 and 3 present more details regarding the situation shown in figure 1.

In particular, figure 2 shows the decomposition of the complex entire movement 40 - for instance of one of the limbs 51, namely the legs 55, and of the torso 53 - into a back-and-forth movement 41 and into an up-and-and down movement 42, respectively.

In figure 3, two distinct states I and II of position, orientation and/or motion of an arm 54 as a limb 51 having attached an arm sensor 24 are demonstrated from which limb sensor position and/or motion data L are derived and provided.

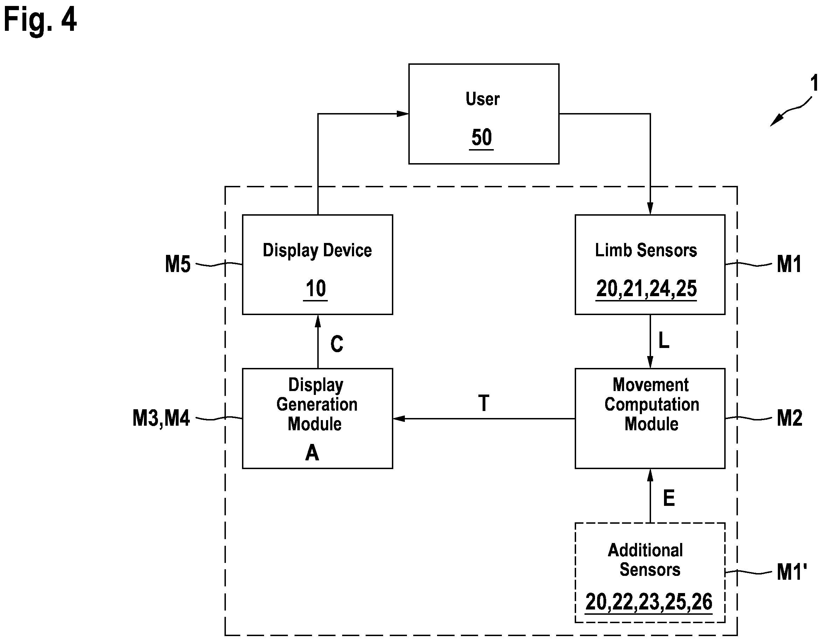

Figure 4 is a schematic block diagram describing the modular configuration of an embodiment of a virtual reality system 1 according to the present invention.

Based on the action of the user 50 in a first module M1 and based on limb sensors 21 particular limb sensor position and/or motion data L are provided, if applicable, together with external or other similar data E based on a further map module M1' and the evaluation of external sensors 26.

In the following and second module M2 the limb sensor position and/or motion data L and the external/other sensor data E are evaluated in the sense of a movement computation thereby deriving and providing user/torso position and/or orientation data T which are representative at least for the position and/orientation of the user 50 or a part and in particular of the torso 53 of the user 50 in the real space environment R as elucidated earlier above.

In the next combined modules M3 and M4 said user/torso position and/or orientation data are evaluated to, first of all, form the required avatar position and/or orientation data A and then to derive therefrom control data C for controlling the operation of the virtual reality display 10 of the following module M5.

The results of the computation are then displayed to the user 50 by means of the display device 10 in the context of M5.

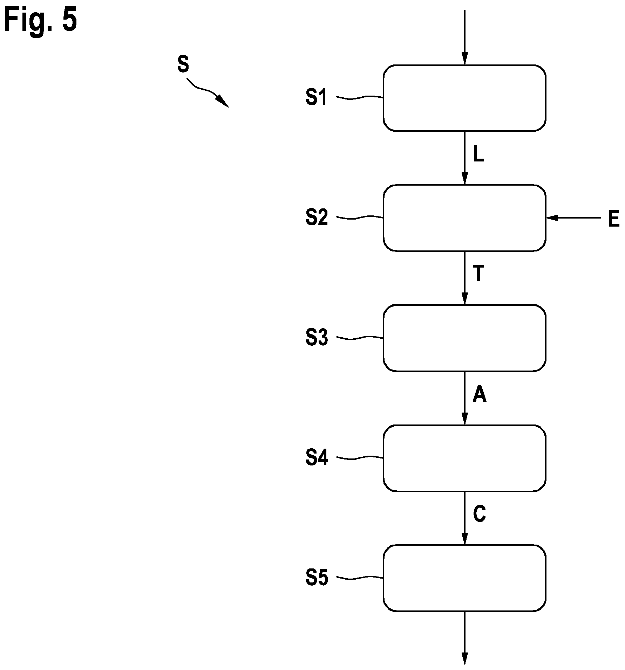

Figure 5 is a schematic flow chart elucidating an embodiment of the method S of controlling a virtual reality display 10 according to the present invention.

In a similar manner as described in the context of the modular structures shown in figure 4, the inventive method S for controlling the virtual reality display 10 can be referred to as a concatenation of method steps S1 to S5.

In the first step S1, limb sensor position and/or motion data L are obtained and provided in view of underlying one or plural limb sensors 21.

In the following step S2, said limb sensor position and/or motion data L are - if applicable - combined with external sensor data E in order to derive and provide user and/or torso position and/orientation data T.

The user and/or torso position and/or orientation data T are forwarded to the following step S3 for deriving and outputting avatar position and/orientation data A which are then provided to the following step S4.

In this particular step S4 display control data C are derived and provided for controlling a step S5 of displaying a particular virtual situation to the user 50 by means of the virtual reality display 10.

These and further aspects of the present invention will also be described in detail in the following:
The present invention particularly concerns means and processes of intuitive locomotion in virtual reality.

### Introduction

Virtual reality applications allow users to interactively explore and experience virtual worlds. Intuitive controls and movement are a key part in this as they create a sense of presence, i.e. the feeling of really being in the virtual world. This immersion is achieved through a 3D stereoscopic display and audio and haptic feedback that accurately reflect the actions of the player.

A tracking setup ensures that movements of the player in the real world are mirrored to the virtual world. This allows desktop and console virtual reality applications to enable the user to walk around freely in a limited real-world area, the play area. Because the virtual world is much larger than the play area in most cases, an additional locomotion system is required to allow the player to explore regions of the virtual world that lie outside his play area.

A variety of solutions have been put forth to solve this problem, starting with the established keyboard or controller input. This movement system works by having the player press a button on the keyboard or move an analogue control stick to make his virtual character walk or run. A major drawback of this method is that most players experience simulation sickness. Simulation sickness is the opposite effect of motion sickness in that motion sickness occurs when a person's body moves but his vision doesn't see the motion and simulation sickness arises when a motion is seen but not otherwise perceived. This is especially prominent in VR when the virtual character moves around while the player's body remains motionless.

Because the keyboard / controller input causes simulation sickness with many players, other locomotion methods were invented of which the teleportation method has become the standard system today. Teleportation works by first having the user point to a location on the ground. Upon pressing or releasing a button, the virtual character is then teleported to that location with no motion in between. This does not evoke simulation sickness as no motion or acceleration is ever seen by the user. The obvious disadvantage of this method is that it is unintuitive and takes some getting used to.

Some other approaches have been put forth like painting a path on the ground and then teleporting or sweeping in small steps. Also, a number of devices have been developed which enable the user to control movement through his feet, like the 3D rudder, presented at CES 2018. These methods require the user to buy additional equipment.

The invention presented in this document provides a way of intuitively moving around in the virtual space environment without inducing simulation sickness. It only requires the hardware provided by the manufacturers of desktop and console VR solutions.

### Tracking setup in various VR systems

There is a number of VR systems on the market, each with their own tracking system. These can, however, be broken up into two main categories: Head-only tracking and body tracking.

Head-only tracking methods like Google Cardboard or GearVR provide a headset with a stereoscopic display which may be provided by a smartphone. Sensors like accelerometer, gyroscope and magnetometers track the rotation of the head so that the appropriate view can be shown.

Body tracking systems are common for desktop and consoles. As of this writing, most common ones are the Oculus Rift, HTC Vive and Microsoft MR. Unlike the head-only tracking systems which only track the rotation of the user's head, body tracking systems provide hand controllers which are also tracked in real-world space. For all tracked devices, the rotation and location are recorded.

In addition to the sensors mentioned above, body tracking systems employ optical methods like cameras and lasers to accurately determine the location and rotation of a tracked device within the room. These hand controllers are the primary way of interacting with the game world and, while in use, are constantly held in the user's hands.

### Overview of the key aspects and capabilities of the invention

The invention presented here allows the user to move around in the virtual world by performing a jogging motion inside his play area, running on the spot. It utilizes the tracked position, velocity and acceleration of the headset and of the hand controllers to deduce the torso orientation of the user, and - if applicable - of further sensors provided. While the player is running on the spot inside his room, he progresses forward in virtual space environment.

This approach reduces or prevents simulation sickness by having the user perform a real motion with his head. When at rest, the human sense of balance is sensitive enough to recognize even small accelerations but while running, the up-and-down accelerations are so large that a comparably small forward acceleration or deceleration cannot be detected. In consequence, the user both sees and perceives a motion and therefore does not become simulation sick.

For this to work properly, the movement in virtual space must be well-coordinated with the real-world motion. Large accelerations and decelerations must be avoided and any change in velocity in the virtual space should only occur while the user is performing his running motion.

The algorithm which performs this task has been implemented and tested. It determines the direction of the running motion from the limb movement and/or based on data derived from further sensors , if available. This allows the user to look around while running. The speed with which the user moves in the virtual world is also controlled through his real-world motion. In general, putting more effort into the real motion also increases the virtual speed.

This method of locomotion is very intuitive because no button presses or any other explicit controls are required. A normal running motion is all the user needs to do. It can be applied in a variety of VR applications, including but not limited to: shooter games, exploration and adventure experiences, social interaction applications and product visualizations. It could even revolutionize home-fitness with jogging simulators that make treadmills obsolete.

### Details of the Method

The tracking information of available sensors is sent to the computer by wire or wirelessly via Bluetooth or some other communication protocol. The current orientation of the devices within the room as well as current sensor values are exposed by the VR system software or operating system through an API. These values are then read out by the application that supports the running method.

For each sensor, three core inputs are of importance: location, velocity and acceleration. If any of these are not available, they can be calculated from existing values by time integration or differentiation. For the motion recognition algorithm, it is convenient to work with head and hand location and rotation rather than headset and controller orientation. These can be obtained by adding a rotation-dependent offset to the location of the tracked device. The center of the head 52, for example, is located about 10 cm behind the headset 9.

The sensor values are constantly monitored by the software to determine whether the user is running or not. The software therefore manages a state of movement which, among others, can take the values "running" and "not running". When certain criteria, determined from the inputs, are fulfilled, the state changes.

When in state "not running", the software might, among others, look at the following criteria to determine when a running motion starts:
- Hands and feet are in motion with opposite directions.
- Hands are above a minimum height but well below the head.
- Head is accelerating upwards.
- Head is above a minimum height.
- Head is not moving horizontally.

When in state "running", the software determines speed and direction of the back-and-forth motion of the limb sensors in combination with their orientations defines the forward moving direction. This allows the user to freely look around while running without changing his movement direction.

The movement direction of the limb sensors within the room varies both within one running cycle and for different running styles. In addition, when they reach their maximum far-out position the motion of the said sensors temporarily comes to a halt. Therefore, an averaging of the recorded sensor motion directions is performed to keep the virtual character walking in a relatively straight line. The motion recognition also works if only one limb performs the running motion. This may be important for many applications, e.g. when the player is holding an object or weapon in one hand.

The velocity of the virtual character is coupled to the effort the user puts into his jogging motion. Factors which help determine this value may be: the frequency and amplitude of the up-and-down head motion and the maximum speed and distance reached by the limb sensors within one cycle.

In order to prevent simulation sickness, changes in speed and direction are kept as small as possible. This is achieved either with a maximum acceleration, deceleration and turning rate or with some other smoothing function.

In addition to the foregoing description of the present invention, for an additional disclosure explicit reference is taken to graphic representation of figures 1 to 5.

### List of reference signs

- 1: virtual reality system
- 5: control unit
- 9: headset
- 10: virtual reality display
- 11: display unit
- 20: position and/or motion sensor
- 21: limb sensor
- 22: head sensor
- 23: torso sensor
- 24: arm sensor
- 25: leg sensor
- 26: external sensor
- 30: communication channel
- 40: movement
- 41: back-and-forth movement
- 42: up-and-down movement
- 50: user
- 50': avatar assigned to the user 50
- 51: limb of the user 50
- 51': limb of the avatar 50'
- 52: head of the user 50
- 52': head of the avatar 50'
- 53: torso of the user 50
- 53': torso of the avatar 50'
- 54: arm of the user 50
- 54': arm of the avatar 50'
- 55: leg of the user 50
- 55': leg of the avatar 50'

- A: avatar position and/or orientation data
- C: control data for virtual reality display 10
- E: external/other sensor data
- L: limb sensor position and/or motion data
- R: real space environment

- S: method of controlling a virtual reality display 10
- S1: obtaining limb sensor position and/or motion data L
- S2: deriving/providing torso position and/or orientation data T
- S3: deriving/providing avatar position and/orientation data A
- S4: deriving/providing display control data C
- S5: controlling virtual reality display 10

- T: user/torso position and/or orientation data

- V: virtual space environment, virtual reality environment

- x: direction in real space environment R
- x': direction in space of virtual space and/or reality environment V
- y: direction in real space environment R
- y': direction in space of virtual space and/or reality environment V
- z: direction in real space environment R
- z': direction in space of virtual space and/or reality environment V

- I: first state of position, orientation, motion,
- II: first state of position, orientation, motion,

## Claims

1. Method (S) of controlling a virtual reality display (10),
- wherein the virtual reality display (10) is a component of a virtual reality system (1) which comprises as a further component at least one position and/or motion sensor (20) attachable and assigned to a limb (51) of a user (50) of the virtual reality system (1) and referred to as a limb sensor (21), and
- wherein:
(i) limb sensor position and/or motion data (L) are obtained (S1) regarding the limb sensor (21) and/or from the limb sensor (21),
(ii) based on the limb sensor position and/or motion data (L), torso position and/or orientation data (T) are derived and provided (S2) which are representative at least for a position and/or orientation of the user (50) or a part and in particular a torso (53) of the user (50) in an underlying real space environment (R), and
(iii) based on said torso position and/or orientation data (T) and/or its temporal development a display process of the virtual reality display (10) is controlled.

2. Method (S) according to claim 1, wherein based on said torso position and/or orientation data (T) and/or its temporal development, avatar position and/or orientation data (A) and/or its temporal development for an avatar (50') representing the user (50) in a virtual space and/or reality environment (V) are derived and provided (S3).

3. Method (S) according to claim 2, wherein said avatar position and/or orientation data (A) are derived to be representative for a position and/or orientation of the avatar (50') or a part and in particular a torso (53') of the avatar (50') in said virtual space and/or reality environment.

4. Method (S) according to claim 2 or 3, wherein based on said avatar position and/or orientation data (A) and/or its temporal development a display process of the virtual reality display (10) is controlled regarding the visual representation (i) of a virtual reality environment (V), (ii) of entities of the virtual space and/or reality environment (V) and/or (ii) of the avatar, in particular the avatar's position, orientation and/or motion, each of which in a complete or partial ego-configuration and/or in a non-ego configuration of the virtual space and/or reality environment (V).

5. Method (S) according to any one of claims 2 to 4, wherein based on said avatar position and/or orientation data (A) display control data (C) are derived and provided (S4) which are configured (i) in order to control a display unit (11) of the virtual reality display (10) and in order to display the avatar (50') or a part and in particular a torso (53') of the avatar (50') and/or (ii) in order to control the position, orientation, the temporal development and/or movement of the avatar (50') or the part of the avatar (50') and its respective graphical representation in the underlying virtual space and/or reality environment (V).

6. Method (S) according to any one of the preceding claims, wherein limb sensor position and/or motion data (L) are obtained (S1) regarding or from at least one of an arm sensor (24), a hand sensor, a leg sensor (25) and a foot sensor.

7. Method (S) according to any one of the preceding claims, wherein limb sensor position and/or motion data (L) are obtained regarding or from a plurality of limb sensors (21).

8. Method (S) according to any one of the preceding claims, wherein limb sensor position and/or motion data (L) are analyzed in view of position, orientation, velocity and/or acceleration of the respective limb sensor (21) regarding a back-and-forth movement and/or an up-and-down movement in the underlying real space environment.

9. Method (S) according to any one of claims 2 to 8, wherein avatar position and/or orientation data (A) are conditionally derived in case that the limb sensor position and/or motion data (L) refer to a predetermined state of movement of the user (50) in the underlying real space environment and in particular a state of at least one of the user (50) walking, running and racing, and in particular to a user (50) moving on the spot.

10. Method (S) according to any one of claims 2 to 9, wherein data from position and/or motion sensors (20) other than said one or plural limb sensors (21) are obtained and evaluated, in particular
(i) from at least one of a head sensor (22) of the underlying user (50), e.g. a headset, a torso sensor (23) of the underlying user (50) and an external sensor (26) located remotely and/or mechanically uncoupled from the user (50),
(ii) for deriving presence or absence of a predetermined state of movement of the user (50),
(iii) for additionally deriving the position and/or orientation of the user (50) or of a part of the user and in particular of the torso (53) in the underlying real space environment (R) and/or
(iv) for generating, verifying, proving and/or making plausible said avatar position and/orientation data (A).

11. Method (S) according to any one of the preceding claims, wherein data from position and/or motion sensors (20) obtained and/or analyzed are at least one of
- position data, in particular coordinates, GPS data and/or data representative for a position in a real space environment (R),
- orientation data, in particular based on coordinates, on GPS data and/or on data representative for an orientation in a real space environment (R),
- velocity data, in particular representative for a motion in space with a certain velocity and direction in a real space environment (R),
- acceleration data, in particular representative for a motion in space with a certain acceleration and direction in a real space environment (R), and
- optical data, in particular image and/or camera data, representative for a view on the underlying real space environment (R) of the user (50) and/or representative for a view on the user (50) or on a part of the user (50) itself, in particular on a torso (53) of the user (50) or a part thereof.

12. Control unit (5) for controlling a virtual reality display (10), which is configured to initiate, perform and/or control a method according to any one of the preceding claims.

13. Control unit (5) according to claim 10, which is configured as a component of the underlying virtual reality system (1) and in particular of the underlying virtual reality display (10).

14. Virtual reality display (10), which is configured to be used and/or controlled by a method according to any one of claims 1 to 11 and/or which comprises a control unit (100) according to claim 12 or 13.

15. Virtual reality system (1), which is configured to be used and/or controlled by a method according to any one of claims 1 to 11, which comprises a control unit (5) according to claim 12 or 13 and/or which comprises a virtual reality display (10) according to claim 14.
